# EUROPEAN PATENT SPECIFICATION

(11) **EP 2 050 774 B1**
(45) Date of publication and mention of the grant of the patent: **11.04.2012**
(21) Application number: 07792049.4
(22) Date of filing: 06.08.2007
(51) Int. Cl.: C08G 2/10, C08G 2/22

(54) **PROCESS FOR PRODUCTION OF OXYMETHYLENE COPOLYMERS**
VERFAHREN ZUR HERSTELLUNG VON OXYMETHYLEN-COPOLYMEREN
PROCÉDÉ DE PRODUCTION DE COPOLYMÈRES DE L'OXYMÉTHYLÈNE

(30) Priority: 08.08.2006 JP 2006215815
(43) Date of publication of application: 22.04.2009
(73) Proprietor: Mitsubishi Gas Chemical Company, Inc., Tokyo 100-8324 (JP)
(72) Inventor: OKAMURA, Akira, Yokkaichi-shi, Mie 510-0886 (JP); NAGAI, Satoshi, Yokkaichi-shi, Mie 510-0886 (JP)
(74) Representative: Gille Hrabal
(86) International application number: PCT/JP2007/065379
(87) International publication number: WO 2008/018414

(56) References cited:
- JP-A- 2001 240 639
- JP-A- 2003 342 442
- JP-B2- 07 005 694
- JP-B2- 55 019 942
- US-A- 5 929 195
- DATABASE WPI Week 200505 Thomson Scientific, London, GB; AN 2005-043925 XP002598850 -& JP 2004 359757 A (MITSUBISHI GAS CHEM CO INC) 24 December 2004 (2004-12-24)
- DATABASE WPI Week 200566 Thomson Scientific, London, GB; AN 2005-642810 XP002598851 -& JP 2005 232404 A (MITSUBISHI GAS CHEM CO INC) 2 September 2005 (2005-09-02)

## Description

The present invention relates to a method of producing oxymethylene copolymers, and more particularly to a method of continuously producing the oxymethylene copolymers.

### BACKGROUND ART

Oxymethylene copolymers are excellent in mechanical and thermal properties and, therefore, have been used as typical engineering plastics in various extensive application fields such as mechanical fields, electric and electronic fields and automobile fields. In recent years, with the expansion of application fields of these plastics, there are increasing demands for still higher properties of the plastics and production thereof at lower costs.

The oxymethylene copolymers are resins having a high crystallinity, and it has been recognized that the oxymethylene copolymers rapidly produce a spherulite in the course of undergoing supercooling and solidification from a molten state thereof. It is known that the size of the thus produced spherulite of the oxymethylene copolymers gives adverse influences on various properties of products obtained therefrom including not only mechanical properties but also various other properties such as gas permeability.

For example, it is considered that in the course of crystallization of the oxymethylene copolymers, a material composed of the oxymethylene copolymers suffers from occurrence of undesirable stress or microscopic cracks on an inside and surface thereof, so that mechanical properties of products obtained therefrom tend to be adversely affected. In general, it is considered that when applying an external force onto a spherulite having a larger size and showing a larger fluctuation in the size, the spherulite tends to be deteriorated in its properties such as rigidity, toughness and impact resistance or tends to suffer from fluctuation in measured values thereof owing to concentration of a stress therein.

As the method for controlling a size of the spherulite, there are known the method of dispersing an inorganic compound such as talc and boron nitride therein, and the method of adding a specific organic compound thereto.

When the inorganic compound, in particular, talc, is dispersed in the spherulite of the oxymethylene copolymers, a large amount of talc must be dispersed therein in order to attain a sufficient effect by the addition thereof. For this reason, if the talc has a poor affinity to the oxymethylene copolymers, the products obtained from the oxymethylene copolymers tend to be deteriorated in toughness owing to the talc which is present out of the spherulite. In addition, when using very expensive boron nitride, it is not possible to meet the requirement for reduction in production costs thereof.

When adding the organic compound to the spherulite of the oxymethylene copolymers, the effect attained by the addition thereof tends to be insufficient, or the oxymethylene copolymers rather tend to be unsuitably colored or suffer from adverse influences such as deteriorated thermal stability by the addition thereof.

As the other methods for controlling the size of the spherulite of the oxymethylene copolymers, there are known the methods of adding an oxymethylene copolymer having a branched or network structure thereto (JP 55-19942B, JP 7-5694B and JP 2928823). In these methods, the oxymethylene copolymer having a branched or network structure is first produced from a comonomer or a termonomer as a polyfunctionally reactive compound, and then the thus produced oxymethylene copolymer having a branched or network structure is added to the linear oxymethylene copolymers in the subsequent extrusion step or compounding step.

However, in the step of producing the oxymethylene copolymer having a branched or network structure, there tend to occur problems such as a low polymerization reaction rate and a large fluctuation of a power required in the polymerization step owing to a very small melt index of the polymerization reaction system, and further in the subsequent extrusion step, there tend to occur problems such as considerable deterioration in productivity owing to need of controlling the power as desired as well as the resin temperature. Thus, the conventional methods have failed to attain satisfactory effects from the viewpoint of the productivity.

In addition, when using the oxymethylene copolymer having a branched or network structure singly, to enhance a nucleating effect, there tend to occur problems including 1) a very small melt index as described above, and 2) deterioration in toughness owing to formation of a structure having a high branching or network density.

### DISCLOSURE OF THE INVENTION

### PROBLEM TO BE SOLVED BY THE INVENTION

An object of the present invention is to provide a process for producing an oxymethylene copolymer exhibiting a practical toughness with a good productivity which is capable of well controlling a crystallization velocity and a size of a spherulite thereof.

### MEANS FOR SOLVING PROBLEM

As a result of intensive and extensive researches for overcoming the above problems, the inventors have found the following invention. The present invention relates to a

process for producing an oxymethylene copolymer comprising the step of continuously polymerizing trioxane (as a component A) with a cyclic formal (as a component B) having a ring structure containing at least one carbon-to-carbon bond in a polymerization reaction system in the presence of a cationic polymerization catalyst,
wherein a polyfunctional glycidyl ether and/or a tetraol (as a component C) is intermittently fed to a polymerization raw material or the polymerization reaction system containing at least one of the components A and B at latest until an initial stage of the polymerization reaction under the following conditions (1), (2) and (3):
(1) the ratio of the feed time (t) for intermittently feeding the component C to the feed time (T) for feeding the component A to the polymerization reaction system is from 1/600 to 1/6;
(2) the amount of the component C fed over the feed time (t) is from 0.4 to 50 mmol per 1 mol of the component A; and
(3) the whole amount of the component C fed is from 0.0004 to 0.5 mmol per 1 mol of the component A,
wherein the feed time (t) for intermittently feeding the component C is the period of from the time at which the feed rate of the component C exceeds 0.2 mmol per 1 mol of the component A to the time at which the feed rate thereof is returned to 0.2 mmol per 1 mol of the component A, in the case where the amount of the component C is fed is increased and decreased.

### BRIEF DESCRIPTION OF DRAWING

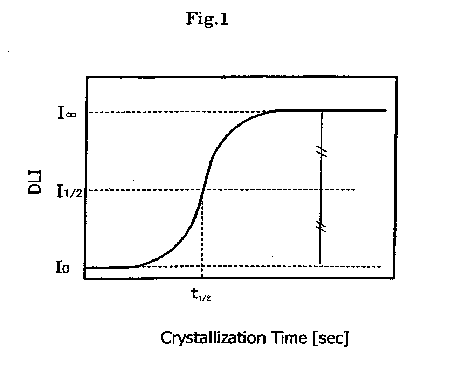

Fig. 1 is a view relating to a method of calculating a 1/2 crystallization time and showing a relationship between a depolarization light intensity and the 1/2 crystallization time.

### BEST MODE FOR CARRYING OUT THE INVENTION

The process for producing an oxymethylene copolymer according to the present invention includes the step (polymerization step) of continuously polymerizing trioxane (as a component A) with a cyclic formal (as a component B) having a ring structure containing at least one carbon-to-carbon bond in a polymerization reaction system in the presence of a cationic polymerization catalyst.

The polymerization method for obtaining the oxymethylene copolymer is preferably a mass polymerization method using substantially no solvent. The mass polymerization is a polymerization method using monomers kept in a molten state. In the mass polymerization, with the progress of the polymerization reaction, the obtained polymerization reaction product is crystallized in a liquid monomer mixture, and then a whole part of the reaction system is formed into a mass and a powder, thereby obtaining a solid polymer. The mass polymerization is preferably performed in the absence of oxygen and more preferably preformed in a nitrogen atmosphere.

Examples of the cationic polymerization catalyst used in the present invention include boron trifluoride, tin tetrachloride, titanium tetrachloride, phosphorus pentachloride, phosphorus pentafluoride, arsenic pentafluoride, antimony pentafluoride and coordinated compounds thereof as well as heteropolyacids, isopolyacids, perfluoroalkylsulfonic acids and derivatives thereof. These catalysts may be used in combination of any two or more thereof.

Among these cationic polymerization catalysts, in particular, preferred are compounds containing boron trifluoride, and hydrates and coordinated complex compounds of boron trifluoride, and more preferred are boron trifluoride diethyl etherate and boron trifluoride dibutyl etherate which are coordinated complexes of boron trifluoride with ethers.

The amount of the cationic polymerization catalyst added, when using the compound containing boron trifluoride as the catalyst, is preferably from 3.0 x 10⁻⁶ to 2.0 x 10⁻⁴ mol and more preferably from 8.0 x 10⁻⁶ to 8.0 x 10⁻⁵ mol in terms of boron trifluoride per one mol of the component A as the raw monomer.

The cationic polymerization catalyst is preferably used in the form of a dilute solution prepared by diluting the catalyst with an organic solvent having no adverse influence on the polymerization reaction in order to uniformly disperse the catalyst in the polymerization reaction system. Examples of the organic solvent include ethylene glycol; ethers such as dimethyl ether, diethylene glycol dimethyl ether and n-butyl ether; aromatic hydrocarbons such as benzene and toluene; aliphatic hydrocarbons such as n-hexane and cyclohexane; halogenated hydrocarbons such as methylene dichloride and ethylene dichloride; and the like.

In the present invention, the component A is used as a raw monomer. The component B is used as a comonomer.

Specific examples of the comonomer include 1,3-dioxolane, 2-ethyl-1,3-dioxolane, 2-propyl-1,3-dioxolane, 2-butyl-1,3-dioxolane, 2,2-dimethyl-1,3-dioxolane, 2-phenyl-2-methyl-1,3-dioxolane, 4-methyl-1,3-dioxolane, 2,4-dimethyl-1,3-dioxolane, 2-ethyl-4-methyl-1,3-dioxolane, 4,4-dimethyl-1,3-dioxolane, 4,5-dimethyl-1,3-dioxolane, 2,2,4-trimethyl-1,3-dioxolane, 4-hydroxymethyl-1,3-dioxolane, 4-butyloxymethyl-1,3-dioxolane, 4-phenoxymethyl-1,3-clioxolane, 4-chloromethyl-1,3-dioxolane, 1,3-dioxocabicyclo[3,4,0]nonane, oxepanes such as 1,3-dioxepane, and oxocanes such as 1,3,6-trioxocane. Among these comonomers, especially preferred is 1,3-dioxolane.

The amount of the comonomer added upon the polymerization is preferably from 0.5 to 40.0 mol% and more preferably from 1.1 to 20.0 mol% on the basis of the component A. When the amount of the comonomer added is 40.0 mol% or less, it is possible to inhibit deterioration in polymerization yield. When the amount of the comonomer added is 0.5 mol% or more, it is possible to inhibit deterioration in thermal stability.

In the polymerization step, at latest until an initial stage of the polymerization reaction, a glycidyl compound and/or an alcohol (as a component C) is intermittently fed to the polymerization raw material or the polymerization reaction system containing at least one of the components A and B under the specific conditions.

When the component C is continuously added to the polymerization raw material or the polymerization reaction system, substantially a whole of the resultant oxymethylene copolymer has a branched or network structure, resulting in extremely small melt index (high viscosity) thereof. As a result, in order to suitably adjust the melt index of the oxymethylene copolymer, a large amount of a chain transfer agent must be added thereto, resulting in production of a material having a poor impact resistance (brittle) and a poor toughness.

On the other hand, when the specific amount of the component C is intermittently fed to the polymerization raw material or the polymerization reaction system under the specific conditions and subjected to the polymerization reaction, the oxymethylene copolymer having a branched or network structure is heterogeneously produced. As a result, the resultant product can be inhibited from showing an extremely small melt index, thereby producing a material composed of an oxymethylene copolymer having a good toughness without practical problems. Also, when varying conditions for feeding the component C, the oxymethylene copolymer can be well-controlled in a crystallization velocity and a size of a spherulite thereof. As a result, the condition or amount of the branched or network structure dispersed in the resultant oxymethylene copolymer can be desirably controlled.

The "intermittent feeding" used herein means such a feeding manner in which the amount of the component C fed is controlled such that a portion where a large amount of the component C is present and a portion where substantially no or completely no component C is present are allowed to coexist in the polymerization raw material or the polymerization reaction system. Examples of the intermittent feeding manner include a manner of feeding the component C at predetermined intervals, a manner of feeding a larger amount of the component C at predetermined intervals while continuously feeding a smaller amount of the component C, and a manner of increasing and decreasing an amount of the component C fed, for example, such that the change in amount of the component C fed is expressed by a sinusoidal curve. Meanwhile, in the case where the amount of the component C fed is increased and decreased, the feed time (t) means a period of from the time at which the feed rate of the component C exceeds 0.2 mmol per 1 mol of the trioxane to the time at which the feed rate thereof is returned to 0.2 mmol per 1 mol of the trioxane.

In addition, the "polymerization reaction system" means a known polymerization apparatus capable of conducting a polymerization reaction such as cationic polymerization reaction.

The component C is preferably fed at latest until an initial stage of the polymerization reaction, more specifically, until such a stage shortly after initiation of the polymerization between the components A and B, and more preferably before either one of the components A and B is fed to the polymerization reaction system. Further, there is also preferably used such a method in which the component C is fed to a mixture formed by merely mixing the components A and B with each other.

Either one of the components A, B and C or a mixture of any two or more thereof preferably contains a cationic polymerization catalyst, if required, together with the below-mentioned chain transfer agent and other additives. Also, the chain transfer agent may be mixed in these components at latest until an initial stage of the polymerization reaction.

The intermittent addition of the component C is conducted such that the following conditions(1), (2) and (3) are satisfied:
(1) The ratio (t/T) of a feed time (t) for intermittently feeding the component C to a feed time (T) for feeding the component A to the polymerization reaction system is from 1/600 to 1/6 and preferably from 1/300 to 1/10. When the ratio (t/T) is less than 1/600, only a less effect or no effect of enhancing the crystallization velocity tends to be attained. When the ratio (t/T) is more than 1/6, such an addition tends to result in the same effect as that of continuous addition of the component C.
(2) The amount of the component C fed over the feed time (t) is from 0.4 to 50 mmol and preferably from 0.6 to 5 mmol per 1 mol of the component A. When the amount of the component C fed over the feed time (t) is less than 0.4 mmol, only a less effect or no effect of enhancing the crystallization velocity tends to be attained. Even tough the amount of the component C fed over the feed time (t) is more than 5 mmol, the effect of enhancing the crystallization velocity tends to be no longer improved, resulting in unpractical process.
(3) A whole amount of the component C fed is from 0.0004 to 0.5 mmol and more preferably from 0.002 to 0.5 mmol per 1 mol of the trioxane (component A). When the whole amount of the component C fed lies within the range of from 0.0004 to 0.5 mmol per 1 mol of the trioxane, the polymerization reaction rate can be inhibited from being lowered.

In order to intermittently feed the component C under the above specific conditions, any suitable method may be used as long as the method is capable of intermittently feeding the specific amount of the component C during the predetermined feed time to the polymerization raw material or the polymerization reaction system in the form of a continuous fluid containing at least one of the component A, the component B, the catalyst and the chain transfer agent. As the method of intermittently feeding the component C, there may be used, for example, the method of intermittently feeding the component C to a continuous fluid composed of the component A and then mixing the obtained fluid with a continuous fluid composed of the component B and the chain transfer agent, followed by finally feeding the catalyst to the resultant mixture; the method of intermittently feeding the component C to a continuous fluid composed of the component B and then mixing the obtained fluid with a continuous fluid composed of the component A and the chain transfer agent, followed by finally feeding the catalyst to the resultant mixture; the method of intermittently feeding the component C to a continuous fluid composed of the components A and B and then mixing the obtained fluid with a continuous fluid composed of the chain transfer agent, followed by finally feeding the catalyst to the resultant mixture; the method of intermittently feeding the component C to a continuous fluid composed of the components A and B and the chain transfer agent, followed by finally feeding the catalyst to the resultant mixture; and the method of intermittently feeding the component C to a continuous fluid composed of the chain transfer agent and then mixing the obtained fluid with a continuous liquid composed of the component A and B, followed by finally feeding the catalyst to the resultant mixture, though not limited to these methods. Further, if the specific amount of the component C can be fed during the predetermined feed time, the component C fed may be divided into two or more separate parts.

The glycidyl compound as the component C is a polyfunctional glycidyl ether compound.

Examples of the polyfunctional glycidyl compound include diglycidyl ethers such as ethylene glycol diglycidyl ether, propylene glycol diglycidyl ether, 1,4-butanediol diglycidyl ether, hexamethylene glycol diglycidyl ether, resorcinol diglycidyl ether, bisphenol A diglycidyl ether, hydroquinone diglycidyl ether, polyethylene glycol diglycidyl ether, polypropylene glycol diglycidyl ether and polybuthylene glycol diglycidyl ether; triglycidyl ethers such as glycerol triglycidyl ether and trimethylol propane triglycidyl ether; tetraglycidyl ethers such as pentaerythritol tetraglycidyl ether

Among these polyfunctional glycidyl compounds, 1,4-butanediol diglycidyl ether is preferably usable.

These glycidyl compounds may be used singly or in the form of a solution. When using the glycidyl compounds in the form of a solution, as the solvent, there may be used aliphatic hydrocarbons such as hexane, heptane and cyclohexane; aromatic hydrocarbons such as benzene, toluene and xylene; and halogenated hydrocarbons such as methylene dichloride and ethylene dichloride. Meanwhile, the amount of residual chlorine in the glycidyl compounds is not particularly limited, and is preferably as small as possible.

The alcohol is a tetraol such as pentaerythritol, diglycerol and sorbitan.

. Among these alcohols, preferred are pentaerythritol and diglycerol. These alcohols may be used singly or in the form of a solution. When the alcohols are used in the form of a solution, as the solvent, there may be used the same solvents as those for the glycidyl compounds.

The chain transfer agent is preferably added until an initial stage of the polymerization reaction in order to control a polymerization degree of the resultant oxymethylene copolymer.

Examples of the suitable chain transfer agent include carboxylic acids, carboxylic anhydrides, esters, amides, imides, phenols and acetal compounds. Among these chain transfer agents, preferred are phenol, 2,6-dimethyl phenol, methylal and polyoxymethylene dimethoxide, and most preferred is methylal. Methylal may be used singly or in the form of a solution. The amount of the methylal solution added is preferably less than 2000 ppm in terms of methylal on the basis of trioxane as the raw monomer. When methylal is used in the form of a solution, as the solvent, there may be used the same solvents as those for the glycidyl compounds.

After completion of the polymerization step, the resultant polymerization reaction mixture is preferably subjected to deactivation treatment in order to eliminate an activity of the cationic polymerization catalyst. The deactivation treatment may be conducted by using a catalyst deactivator such as trivalent organophosphorus compounds, amine compounds and hydroxides of alkali metals or alkali earth metals. Examples of the amine compounds include primary, secondary and tertiary aliphatic or aromatic amines, heterocyclic amines and hindered amines. Further, as the catalyst deactivator, there may also be used other know catalyst deactivators.

Specific examples of the catalyst deactivator include ethyl amine, diethyl amine, triethyl amine, mono-n-butyl amine, di-n-butyl amine, tri-n-butyl amine, aniline, diphenyl amine, pyridine, piperidine and morpholine. Among these catalyst deactivators, preferred are trivalent organophosphorus compounds and tertiary amines, and most preferred is triphenyl phosphine. The amount of the cationic polymerization catalyst added is not particularly limited as long as the cationic polymerization catalyst can be fully deactivated. The catalyst deactivator is usually used in such an amount that the molar ratio of the catalyst deactivator to the cationic polymerization catalyst is in the range of from 1.0 x 10⁻¹ to 1.0 x 10.

When the catalyst deactivator is used in the form of a solution or a suspension, the solvent used in the solution or suspension is not particularly limited- Examples of the solvent include, in addition to water and alcohols, various aliphatic or aromatic organic solvents such as acetone, methyl ethyl ketone, hexane, cyclohexane, heptane, benzene, toluene, xylene, methylene dichloride and ethylene dichloride.

The oxymethylene copolymer obtained after the polymerization step or the deactivation treatment may be subjected, if required, to washing, separation and recovery of unreacted monomers, drying, etc.

Meanwhile, in the present invention, the oxymethylene copolymer exhibiting an excellent thermal stability can be produced with a high yield. Therefore, the above steps and treatments may be omitted.

In the present invention, the oxymethylene copolymer having a branched or network structure is heterogeneously produced via the polymerization step in which the component C is intermittently fed. However, the oxymethylene copolymer having a branched or network structure is preferably uniformly dispersed in the finally obtained reaction product.

In order to uniformly disperse the oxymethylene copolymer having a branched or network structure, there may be used the method of uniformly blending the obtained oxymethylene copolymer within several hours from the production thereof in a batch manner using a blender such as a Nauter mixer, or receiving the oxymethylene copolymer directly from the polymerization step in the blender and continuously uniformly blending the copolymer therein while discharging the bended copolymer to the next step; and the method of forming the resultant oxymethylene copolymer into a pelletized blend to thereby obtain a homogeneous product.

The thus uniformly blended oxymethylene copolymer is preferably subjected to a stabilization treatment. As the stabilization treatment, there may be used the method of melting and kneading the above obtained oxymethylene copolymer to remove unstable portions therefrom. At this time, one or more compounds selected from the group consisting of hindered phenol-based compounds, nitrogen-containing compounds, hydroxides of alkali metals or alkali earth metals, inorganic salts and carboxylic acid salts may be added to the copolymer. Further, if required, one or more additives generally used for thermoplastic resins may be added to the copolymer. Examples of the additives include colorants such as dyes and pigments, lubricants, releasing agents, antistatic agents, ultraviolet absorbers, light stabilizers and surfactants as well as organic polymer materials and inorganic or organic fillers in the form of fibers, powders or plates.

The present invention will be described in more detail by referring to the following examples and comparative examples. However, it should be noted that these examples are only illustrative and not intended to limit the invention thereto. Meanwhile, The details of the terms and measuring methods used in the following examples and comparative examples are as follows.

Continuous reactor: A polymerization apparatus having an inner sectional shape of partially overlapped two circles, a longer diameter of the inner section of 20 cm and a L/D ratio of 7.2 (wherein L is an effective length of the reactor and D is the longer diameter of the inner section). The continuous reactor has an elongated casing surrounded by a jacket in which a pair of shafts are disposed. Onto the respective shafts are fitted a large number of pseudo-triangular plates which are meshed with each other and have a structure capable of cleaning an inner surface of the casing and a surface of the counterpart pseudo-triangular plate when contacted at a tip end thereof with these surfaces.

Terminating agent mixer: A mixer having an inner sectional shape of partially overlapped two circles, a longer diameter of the inner section of 12 cm and a L/D ratio of 7.2. The mixer has an elongated casing surrounded by a jacket in which a pair of shafts are disposed. Onto the respective shafts are fitted a large number of screw-like vanes. The mixer has such a structure that a terminating agent solution is injected thereinto through a feed port and is continuously mixed with the oxymethylene copolymer therein.

MI value (Melt Index): One hundred parts by mass of the oxymethylene copolymer was mixed with 0.3 part by mass of triethylene glycol-bis[3-(3-tert-butyl-5-methyl-4-hydroxyphenyl) propionate] (available from Ciba Geigy Corp.; tradename "IRGANOX 245"), 0.1 part by mass of melamine and 0.05 part by mass of magnesium hydroxide, and the resultant mixture was melt-kneaded at 220°C under a nitrogen gas flow for 20 min using a Labo Plastomill for stabilization treatment thereof and then subjected to measurement according to ASTM-D1238 (at 190°C; under an applied load of 2.16 keg). The lower MI value indicates a higher polymerization degree of the oxymethylene copolymer.

Measurement of 7.12 crystallization time: About 10 mg of pellets of the oxymethylene copolymer were dried at 90°C for 3 h or longer. The dried pellets were sandwiched between two glass plates, melted on a hot plate heated to 200°C and then pressed to obtain a film having a thickness of about 100 µm. The 1/2 crystallization time of the thus obtained film was measured using a polymer crystallization velocity measuring apparatus "MK-701 Model" available from Kotaki Seisakusho Co., Ltd. Upon the measurement, the film was re-melted in an air bath at 200°C for 3 min, and isothermal crystallization thereof was conducted in an oil bath at 148°C.

The 1/2 crystallization time means a time elapsed from initiation of the isothermal crystallization to termination of 1/2 of the crystallization.

In Fig. 1, DLI represents a depolarization light intensity; I_{∞} represents a depolarization light intensity upon termination of the crystallization; I_{1/2} represents a depolarization light intensity upon termination of 1/2 of the crystallization; I₀ represents a depolarization light intensity upon initiation of the crystallization; and t_{1/2} represents a 1/2 crystallization time.

Measurement of average spherulite size: The same procedure as used for the "measurement of 1/2 crystallization time" was repeated to obtain a film having a thickness of about 20 µm. The thus obtained film was crystallized under the same conditions as used for the "measurement of 1/2 crystallization time" and observed by a polarization microscope to measure a size (diameter) of a spherulite thereof and determine an average spherulite size from the measured values.

Tensile elongation at break: The oxymethylene copolymer was subjected to a tensile test at a velocity of 50 mm/min according to ASTM D638 to measure a tensile elongation at break thereof (elongation between gagas).

### EXAMPLES 1 TO 7 AND COMPARATIVE EXAMPLES 1 TO 5

Using a continuous reaction apparatus constituted from the above two continuous reactors and the terminating agent mixer which were connected in series to each other in this order from a side of feeding a raw material, an oxymethylene copolymer was produced.

The component C was intermittently fed to a flow of a mixture composed of 90.0 kg/h of trioxane (component A) and 3.8 kg/h of 1,3-dioxolane (component B) under the conditions shown in the following Tables 1 and 2. Further, a benzene solution of methylal (25% by mass) and a benzene solution of boron trifluoride diethyl etherate as a cationic polymerization catalyst (concentration adjusted: 0.3 mol/kg) was successively fed to the mixture flow to which the component C was already intermittently fed, and then immediately introduced into the first continuous reactor to subject these components to a continuous polymerization reaction (mass polymerization).

Meanwhile, in Example 4, the amount of the component C fed was adjusted such that a minimum feed rate of the component C was 0.045 mmol per 1 mol of trioxane, and a maximum feed rate of the component C was 2.2 mmol per 1 mol of trioxane. In Comparative Example 4, the same procedure as in Example 4 was repeated except that a minimum feed rate of the component C was adjusted to 0.3 mmol per 1 mol of trioxane. In these cases, the feed time (t) of the component C means a period of from the time at which the feed amount (feed rate) thereof exceeded the minimum feed rate to the time at which the feed amount was returned to the minimum feed rate.

The temperature of the jacket of the first continuous reactor (polymerization temperature) was controlled to 85°C, and the temperatures of the jackets of the second continuous reactor and the terminating agent mixer were controlled to 60°C and 40°C, respectively. In addition, triphenyl. phosphine in the form of a benzene solution (concentration adjusted: 0.6 mol/kg) was continuously fed into the terminating agent mixer through an feed port thereof in a molar amount two times that of the catalyst used to stop the polymerization reaction, and the obtained reaction product was pulverized, thereby obtaining an oxymethylene copolymer. The polymerization yields of the oxymethylene copolymers obtained in these Examples and Comparative Examples all were 98% or more.

One hundred parts by mass of the thus obtained oxymethylene copolymer was mixed with 0.3 part by mass of triethylene glycol-bis-3-(3-tert-butyl-4-hydroxy-5-methylphenyl)propionate (tradename: "IRGANOX 245") available from Ciba Specialty Chemicals Corp., 0.1 part by mass of melamine and 0.05 part by mass of magnesium hydroxide, and the obtained mixture was premixed using a Henschel mixer.

Thereafter, the thus premixed material was fed to a vented twin-screw extruder and melt-kneaded therein at 200°C under a reduced pressure of 21.3 kPa to obtain pellets. The thus obtained pellets were subjected to the above measurement of tensile elongation at break. The results are shown in the following Tables 1 and 2.

**TABLE 1**

| | Examples | | | | | | |
|---|---|---|---|---|---|---|---|
| | 1 | 2 | 3 | 4 | 5 | 6 | 7 |
| Component C | BDGE | BDGE | BDGE | BDGE | PEGDGE | PETGE | PE |
| Concentration of component C (mol/kg) | 3 | 3 | 3 | 3 | 3 | 3 | 3 |
| t/T | 1/120 | 1/30 | 1/120 | 1/120 | 1/120 | 1/120 | 1/120 |
| Amount of component C fed over feed time (t) (mmol/mol-TOX) | 2.2 | 2.2 | 3.3 | 2.2 | 2.2 | 2.2 | 2.2 |
| Whole amount of component C fed (mmol/mol-TOX) | 0.018 | 0.073 | 0.028 | 0.063 | 0.018 | 0.018 | 0.018 |
| Amount of catalyst added (mol/mol-TOX) | 4.0 x 10⁻⁵ | 4.0 x 10⁻⁵ | 4.0 x 10⁻⁵ | 4.0 x 10⁻⁵ | 4.0 x 10⁻⁵ | 4.0 x 10⁻⁵ | 4.0 x 10⁻⁵ |
| Methylal (ppm) | 800 | 800 | 800 | 800 | 800 | 800 | 800 |
| Polymerization yield (%) | 99.6 | 99.3 | 99.5 | 99.6 | 99.6 | 99.6 | 99.6 |
| MI (g/10 min) | 7.6 | 7.2 | 7.5 | 7.7 | 7.6 | 7.6 | 7.8 |
| 1/2 Crystallization time (s) | 13 | 12 | 12 | 13 | 13 | 12 | 16 |
| Average spherulite size (µm) | 18 | 9 | 14 | 15 | 16 | 14 | 19 |
| Tensile elongation at break (%) | 75 | 74 | 75 | 73 | 75 | 75 | 74 |

**TABLE 2**

| | Comparative Examples | | | | |
|---|---|---|---|---|---|
| | 1 | 2 | 3 | 4 | 5 |
| Component C | - | BDGE | BDGE | BDGE | BDGE |
| Concentration of component C (mol/kg) | - | 3 | 3 | 3 | 0.5 |
| t/T | - | 1 | 1/3.6 | 1/120 | 1/30 |
| Amount of component C fed over feed time (t) (mmol/mol-TOX) | - | 2.2 | 2.2 | 2.2 | 0.2 |
| Whole amount of component C fed (mmol/mol-TOX) | - | 2.2 | 0.61 | 0.32 | 0.007 |
| Amount of catalyst added (mol/mol-TOX) | 4.0 x 10⁻⁵ | 4.0 x 10⁻⁵ | 4.0 x 10⁻⁵ | 4.0 x 10⁻⁵ | 4.0 x 10⁻⁵ |
| Methylal (ppm) | 800 | 2100 | 1000 | 800 | 800 |
| Polymerization yield (%) | 99.6 | 98.0 | 98.6 | 98.7 | 99.2 |
| MI(g/10 min) | 7.9 | 7.6 | 7.7 | 7.5 | 7.8 |
| 1/2 Crystallization time (s) | 37 | 11 | 11 | 12 | 30 |
| Average spherulite size (µm) | 150 | 8 | 8 | 16 | 100 |
| Tensile elongation at break (%) | 75 | 25 | 30 | 40 | 70 |

In the above Tables 1 and 2, BDGE represents 1,4-butanediol diglycidyl ether; PEGDGE represents polyethylene glycol diglycidyl ether; PETGE represents pentaerythritol tetraglycidyl ether; and PE represents pentaerythritol. Further, "mol-TOX" means "per 1 mol of trioxane".

From the results shown in Tables 1 and 2, it was confirmed that in Examples 1 to 7, the crystallization velocity was increased; and the size of a spherulite of the oxymethylene copolymer was lessened, thereby enabling production of the oxymethylene copolymer having a practical toughness.

### INDUSTRIAL APPLICABILITY

The process for producing an oxymethylene copolymer according to the present invention is capable of well controlling a crystallization velocity and a size of a spherulite thereof and, therefore, is effective for producing the oxymethylene copolymer having a practical toughness with a good productivity. The oxymethylene copolymer obtained by the above process can be extensively used in various application fields such as mechanical fields, electric and electronic fields and automobile fields.

## Claims

1. A process for producing an oxymethylene copolymer comprising the step of continuously polymerizing trioxane (as a component A) with a cyclic formal (as a component B) having a ring structure containing at least one carbon-to-carbon bond in a polymerization reaction system in the presence of a cationic polymerization catalyst,
wherein a polyfunctional glycidyl ether and/or a tetraol (as a component C) is intermittently fed to a polymerization raw material or the polymerization reaction system containing at least one of the components A and B at latest until an initial stage of the polymerization reaction under the following conditions (1), (2) and (3):
(1) the ratio of the feed time (t) for intermittently feeding the component C to the feed time (T) for feeding the component A to the polymerization reaction system is from 1/600 to 1/6;
(2) the amount of the component C fed over the feed time (t) is from 0.4 to 50 mmol per 1 mol of the component A; and
(3) the whole amount of the component C fed is from 0.0004 to 0.5 mmol per 1 mol of the component A,
wherein the feed time (t) for intermittently feeding the component C is the period of from the time at which the feed rate of the component C exceeds 0.2 mmol per 1 mol of the component A to the time at which the feed rate thereof is returned to 0.2 mmol per 1 mol of the component A, in the case where the amount of the component C is fed is increased and decreased.

2. The process according to claim 1, wherein the component C is at least one compound selected from the group consisting of 1,4-butanediol diglycidyl ether, polyethylene glycol diglycidyl ether, pentaerythritol tetraglycidyl ether and pentaerythritol.

3. The process according to claim 1, further comprising the step of feeding a chain transfer agent to either one of the polymerization raw material and the compound C, or a mixture thereof.

## Patentansprüche

1. Verfahren zur Herstellung eines Oxymethylen-Copolymeren, umfassend den Schritt der kontinuierlichen Polymerisation von Trioxan (als Komponente A) mit einem cyclischen Formal (als Komponente B), welches eine Ringstruktur aufweist, die mindestens eine Kohlenstoff-Kohlenstoff-Bindung enthält, in einem Polymerisations-Reaktionssystem in Gegenwart eines kationischen Polymerisations-Katalysator,
wobei ein polyfunktioneller Glycidylether und/oder ein Tetraol (als Komponente C) unterbrochen einem Polymerisations-Rohmaterial oder dem Polymerisations-Reaktionssystem zugeführt wird, das mindestens eine der Komponente A und B enthält, spätestens bis zu einem Anfangsstadium der Polymerisations-Reaktion und unter den folgenden Bedingungen (1), (2) und (3):
(1) das Verhältnis der Zufuhrzeit (t) für das unterbrochene Zuführen der Komponente C zur Zufuhrzeit (T) für die Zufuhr der Komponente A zum Polymerisatlons-Reaktionssystem Ist 1/600 bis 1/6;
(2) die Menge der über die Zufuhrzeit (t) zugeführten Komponente C beträgt von 0,4 bis 50 mmol pro 1 Mol der Komponente A; und
(3) die Gesamtmenge der zugeführten Komponente C ist 0,0004 bis 0,5 mmol pro 1 Mol der Komponente A,
wobei die Zufuhrzelt (t) für unterbrochene Zufuhr der Komponente C die Periode von dem Zeitpunkt an, bei dem die Zufuhrrate der Komponente C 0,2 mmol pro 1 Mol der Komponente A übersteigt bis zu dem Zeitpunkt ist, bei dem die Zufuhrrate davon auf 0,2 mmol pro 1 Mol der Komponente A zurückfällt, für den Fall, dass die Menge der Komponente C, die zugeführt wird, ansteigt und abnimmt,

2. Verfahren nach Anspruch 1, wobei die Komponente C mindestens eine Verbindung ist, die ausgewählt wird aus der aus 1,4-Butandioldiglycidylether, Polyethylengglykoldiglycidylether, Pentaerythrit-tetraglycidylether und Pentaerythrit bestehenden Gruppe,

3. Verfahren nach Anspruch 1, darüber hinaus umfassend den Schritt der Zufuhr eines Ketten-Transfermittels entweder zum Polymerisatlons-rohmaterial oder zur Verbindung C oder zu einem Gemisch davon.

## Revendications

1. Procédé de production d'un copolymère de l'oxyméthylène comprenant l'étape de la polymérisation en contenu de trioxane (comme un composant A) avec un formal cyclique (comme un composant B) ayant une structure cyclique contenant au moins une liaison carbone à carbone dans un système réactionnel de polymérisation en présence d'un catalyseur de polymérisation cationique,
dans lequel un éther glycidylique polyfonctionnel et/ou un tétraol (comme un composant C) est introduit de façon intermittente dans une matière première de polymérisation ou le système réactionnel de polymérisation contant au moins l'une des composants A et B au plus tard jusqu'à une phase initiale de la réaction de la polymérisation aux conditions (1), (2) et (3) suivantes :
(1) le rapport du temps d'introduction (t) pour introduire de façon intermittente le composant C et du temps d'introduction (T) pour introduire le composant A dans le système réactionnel de polymérisation est de 1/600 à 1/6 ;
(2) le montant du composant C introduit pendant le temps d'introduction (t) est de 0,4 à 50 mmol par 1 mol du composant A ; et
(3) le montant total du composant C introduit est de 0,0004 à 0,5 mmol par 1 mol du composant A,
dans lequel le temps d'introduction (t) pour introduire de façon intermittente le composant C est la période du temps auquel le taux d'introduction du composant C dépasse 0,2 mmol par 1 mol du composant A au temps auquel le taux d'introduction de celui-cl revient à 0,2 mmol par 1 mol du composant A, en cas d'augmentation et de diminution du montant introduit du composant C.

2. Procédé selon la revendication 1, dans lequel le composant C est au moins un composé sélectionné parmi le groupe consistant en l'éther diglycidylique de 1,4-butanediol, l'éther diglycidylique de polyéthylène glycol, l'éther tétraglycidylique de pentaérythritol et peritaérythritol.

3. Procédé salon la revendication 1, comprenant en outre l'étape d'introduction d'un agent de transfert de chaîne dans l'un ou l'autre de la matière première de polymérisation et le composant C, ou un mélange de ceux-ci.
